# EUROPÄISCHE PATENTSCHRIFT

(11) **EP 1 588 062 B1**
(45) Veröffentlichungstag und Bekanntmachung des Hinweises auf die Patenterteilung: **22.11.2006**
(21) Anmeldenummer: 03782312.7
(22) Anmeldetag: 05.12.2003
(51) Int. Cl.: F16B 19/06, C04B 35/488

(54) **STANZ-PRÄGENIET**
PUNCHED/STAMPED RIVET
RIVET POSE PAR POIN ONNAGE/ESTAMPAGE

(30) Priorität: 14.01.2003 DE 10301114
(43) Veröffentlichungstag der Anmeldung: 26.10.2005
(73) Patentinhaber: Kerb-Konus-Vertriebs-GmbH, 92224 Amberg (DE)
(72) Erfinder: DONHAUSER, Georg, 92224 Amberg (DE)
(74) Vertreter: Schwarz, Thomas
(86) Internationale Anmeldenummer: PCT/EP2003/013756
(87) Internationale Veröffentlichungsnummer: WO 2004/063575

(56) Entgegenhaltungen:
- EP-A- 1 054 169
- WO-A-03/001075
- DE-A- 19 734 147
- US-A- 6 045 291

## Beschreibung

Die Erfindung betrifft einen Stanz-Prägeniet nach dem Oberbegriff des Anspruchs 1.

Derartige Stanz-Prägeniete werden zur Verbindung von zwei oder mehreren Fügeteilen, Halbzeugarten, Blechen, Profilen und dgl. verwendet. Dabei wird der Niet zunächst mit Hilfe eines Nietstempels ohne Vorlochen durch die zu verbindenden Fügeteile gedrückt, wobei der Niet gleichzeitig als Schneidstempel fungiert. Nach Erreichen eines Anschlagpunktes des Nietstempels werden die zu verbindenden Fügeteile mit der nun geschlossen Fläche von Nietstempel und Niederhalter gegen eine untere Matrize gedrückt. Dadurch wird in das untere Fügeteil um das Schaftende des Niets herum eine Ringnut geprägt, wodurch der Werkstoff des unteren Fügeteils in mindestens eine umlaufende Schaftnut des Nietes gedrückt wird.

Die bisher verwendeten Stanz-Prägeniete sind üblicherweise aus Stahl hergestellt. Bei der Verbindung von Werkstoffen, die in der Kombination mit Stahl-Verbindungselementen zu Korrosion neigen, können jedoch Probleme in Bezug auf die Korrosion zwischen dem Stanzniet und den zu verbindenden Fügeteilen auftreten. Solche Niete sind aus Dokument EP 1 054 169 bekannt, des ein Stanz-Prägeniet gemäß dem Oberbegriff des Anspruchs 1 offenbart. Daher sind die Niete in der Regel mit einer Korrosionsschutzschicht versehen. Beim Einstanzen der Niete in die Fügeteile kann diese Korrosionsschutzschicht jedoch wieder teilweise zerstört werden, wodurch der Korrosionsschutz nicht mehr in gewünschter Weise gewährleistet ist. Darüber hinaus ist kaum eine Beschichtung für den Einsatz in Magnesium geeignet. Probleme gibt es auch bei der mechanischen Nachbearbeitung an der Nietstelle durch Schleifen. Hierbei wird der Korrosionsschutz des Niets ebenfalls beschädigt und das Bauteil kann korrodieren.

Aufgabe der Erfindung ist es, einen Stanz-Prägeniet der eingangs genannten Art zu schaffen, der die vorgenannten Probleme beseitigt.

Diese Aufgabe wird durch einen Stanz-Prägeniet mit den Merkmalen des Anspruches 1 gelöst. Vorteilhafte Ausgestaltungen und zweckmäßige Weiterbildungen der Erfindung sind den Unteransprüchen entnehmbar.

Der erfindungsgemäße Stanz-Prägeniet ist aus einem druck- und scherfesten Keramikmaterial hergestellt. Die Nietgeometrie wird z.B. im Spritzgießverfahren erzeugt. Durch eine Wärmebehandlung nach der Formgebung bekommt der Niet seine Härte. Wie bei Anwendungen mit einem Vollniet aus Stahl wird der Keramikniet selbststanzend durch die Fügeteillagen gedrückt ohne dabei zerstört zu werden.

Zwischen dem Keramikniet und dem Fügeteilwerkstoff entsteht kein elektrochemisches Potential. Der nichtleitende Werkstoff Keramik verhindert damit eine elektrochemische Korrosion. Der aus Keramik bestehende Niet kann auch z.B. durch Schleifen mechanisch bearbeitet werden.

Der Stanz-Prägeniet besteht bevorzugt aus einer Oxidkeramik, Nichtoxidkeramik oder Mischungen verschiedener Oxidkeramiken sowie Mischungen von Nichtoxidkeramiken. Als besonders geeignetes Keramikmaterial für einen Stanz-Prägeniet hat sich eine Zirkonoxidverstärkte Aluminiumoxid- Keramik mit einem Zirkonoxidanteil von mehr als 60 Gewichts- % und einer Werkstoffdichte von mehr als 5,2 kg/dm³ herausgestellt. Der Stanz-Prägeniet weist in vorteilhafter Weise eine Druckfestigkeit von mehr als 2900 N/mm², eine Biegefestigkeit von mehr als 700 N/mm² , eine Bruchzähigkeit von mehr als 8 K_{IC} und ein E-Modul von weniger als 270 N/mm² auf. Die Härte des Stanz-Prägeniets sollte kleiner als 1900 HV 10 (Härte Vickers) sein. Der Keramikwerkstoff ist ferner gasdicht und säurefest.

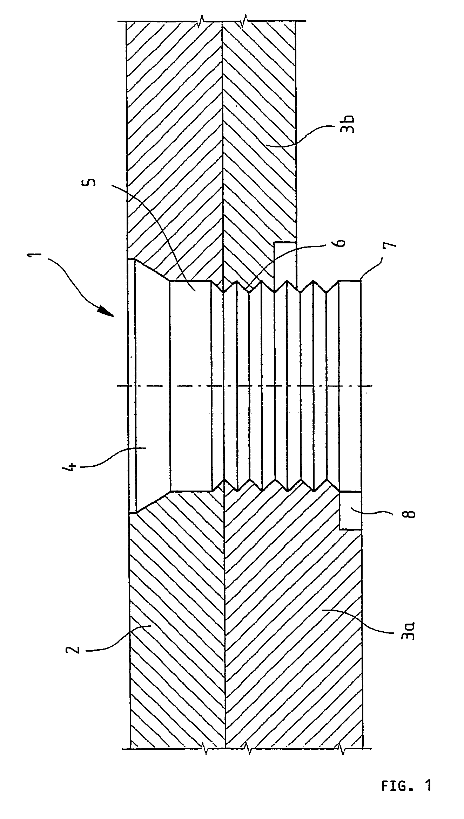

Weitere Besonderheiten und Vorzüge der Erfindung ergeben sich aus der folgenden Beschreibung eines Ausführungsbeispiels anhand der Zeichnung, die einen sogenannten Mehrbereichsniet zur Verbindung von Werkstücken mit unterschiedlicher Fügeteildicke zeigt.

Der in der Zeichnung dargestellte Stanz-Prägeniet 1 ist ein sogenannter Mehrbereichsniet, der zur Fügeverbindung eines oberen Fügeteils 2 mit einem dickeren unteren Fügeteil 3a oder einem dünneren unteren Fügeteil 3b geeignet ist. Ein derartiger Stanz-Prägeniet bietet die Möglichkeit, unterschiedliche Fügeteildicken mit einen einzigen Niettyp verbinden zu können. Der als Vollniet ausgeführte Stanz-Prägeniet 1 enthält einen kegelstumpfförmigen Nietkopf 4 und einen daran anschließenden zylindrischen Schaft 5, in dem mehrere aneinanderliegende Schaftnuten 6 angeordnet sind. Am unteren Ende des Schafts 5 ist eine scharfe Kante 7 vorgesehen, durch welche die Herstellung der Stanzlöcher in den zu verbindenden Fügeteilen 2 und 3a bzw. 3b erleichtert wird.

Zum Herstellen einer Nietverbindung wird dieser Stanz-Prägeniet 1 durch einen nicht gezeigten Nietstempel von oben nach unten durch die mittels eines Niederhalters fixierten Fügeteile 2 und 3a bzw. 3b gedrückt, wobei in den Fügeteilen miteinander fluchtende Stanzlöcher entstehen. Nach Beendigung des Stanzvorgangs wird in das untere Fügeteil 3a bzw. 3b mit Hilfe einer entsprechenden Matrize um den Schaft 5 herum eine ringförmige Vertiefung 8 geprägt, wodurch bewirkt wird, das Material des unteren Fügeteils 3a bzw. 3b unter plastischer Deformation in die Schaftnuten 6 gedrückt wird und diese ausfüllt.

Der Stanz-Prägeniet 1 besteht aus einer Zirkonoxidverstärkten Aluminiumoxid - Keramik mit einem Zirkonoxidanteil von mehr als 60 Gewichts-% und einer Werkstoffdichte von mehr als 5,2 kg/dm³.

Die Erfindung ist nicht auf den in der Zeichnung dargestellten und im einzelnen beschriebenen Mehrbereichsniet beschränkt. Die Nuten können auch über den gesamten Schaft verlaufen. Der Stanz-Prägeniet kann auch nur eine Schaftnut aufweisen. Darüber hinaus kann die Schaftnut anstelle der Kerbform auch abgerundet oder trapezförmig ausgebildet sein.

## Patentansprüche

1. Stanz-Prägeniet (1) mit einem Nietkopf (4) und einem sich daran anschließenden Schaft (5) zum Durchstanzen mindestens zweier aufeinanderliegender Fügeteile (2, 3a, 3b), wobei der Schaft (5) mindestens eine Schaftnut (6) zum Auffüllen mit Werkstoff zumindest des in Stanzrichtung unteren Fügeteils (3a, 3b) bei einem anschließenden Prägevorgang enthält, **dadurch gekennzeichnet, daß** der gesamte Stanz-Prägeniet (1) aus einer Zirkonoxidverstärkten Aluminiumoxid-Keramik besteht.

2. Stanz-Prägeniet nach Anspruch 1, **dadurch gekennzeichnet, daß** die Zirkonoxidverstärkte Aluminiumoxid- Keramik einen Zirkonoxidanteil von mehr als 60 Gewichts-% und eine Werkstoffdichte von mehr als 5,2 kg/dm³ aufweist.

3. Stanz-Prägeniet nach Anspruch 1 oder 2, **dadurch gekennzeichnet, daß** er eine Druckfestigkeit von mehr als 2900 N/mm² aufweist.

4. Stanz-Prägeniet nach einem der Ansprüche 1 bis 3, **dadurch gekennzeichnet, daß** er eine Biegefestigkeit von mehr als 700 N/mm² aufweist.

5. Stanz-Prägeniet nach einem der Ansprüche 1 bis 4, **dadurch gekennzeichnet, daß** er eine Bruchzähigkeit von mehr als 8 K_{IC} aufweist.

6. Stanz-Prägeniet nach einem der Ansprüche 1 bis 5, **dadurch gekennzeichnet, daß** er ein E-Modul von weniger als 270 N/mm² aufweist.

7. Stanz-Prägeniet nach einem der Ansprüche 1 bis 6, **dadurch gekennzeichnet, daß** er eine Härte von weniger als 1900 HV 10 aufweist.

8. Stanz-Prägeniet nach einem der Ansprüche 1 bis 7, **dadurch gekennzeichnet, daß** die Keramik gasdicht und säurefest ist.

## Claims

1. Punched/stamped rivet (1) with a rivet head (4) and an adjoining shank (5) for punching through at least two superposed joint parts (2, 3a, 3b), the shank (5) comprising at least one shank groove (6) for filling with material at least of the lower part of the joint (3a, 3b) in the punching direction during an immediately following stamping operation, **characterised in that** the entire punched/stamped rivet (1) is made of an aluminium oxide ceramic material reinforced with zirconium oxide.

2. Punched/stamped rivet according to claim 1, **characterised in that** the aluminium oxide ceramic material reinforced with zirconium oxide has a zirconium oxide content of more than 60% by weight and a material density of more than 5.2 kg/dm³.

3. Punched/stamped rivet according to claim 1 or 2, **characterised in that** it has a compression strength of more than 2900 N/mm².

4. Punched/stamped rivet according to one of claims 1 to 3, **characterised in that** it has a bending strength of more than 700 N/mm².

5. Punched/stamped rivet according to one of claims 1 to 4, **characterised in that** it has a fracture strength of more than 8 K_{IC}.

6. Punched/stamped rivet according to one of claims 1 to 5, **characterised in that** it has an E modulus of less than 270 Nmm².

7. Punched/stamped rivet according to one of claims 1 to 6, **characterised in that** it has a hardness of less than 1900 HV 10.

8. Punched/stamped rivet according to one of claims 1 to 7, **characterised in that** the ceramic material is gas tight and acid resistant.

## Revendications

1. Rivet posé par poinçonnage/estampage (1) avec une tête de rivet (4) et une tige adjacente (5) pour assembler par poinçonnage au moins deux pièces à joindre superposées (2, 3a, 3b), la tige (5) contenant au moins une rainure de tige (6) pour remplir de matériau au moins la pièce d'assemblage inférieure dans le sens du poinçonnage (3a, 3b) pour un estampage ultérieur, **caractérisé en ce que** l'ensemble du rivet posé par poinçonnage/estampage (1) se compose d'une céramique à l'oxyde d'aluminium renforcée à l'oxyde de zirconium.

2. Rivet posé par poinçonnage/estampage selon la revendication 1, **caractérisé en ce que** la céramique à l'oxyde d'aluminium renforcée à l'oxyde de zirconium présente une part d'oxyde de zirconium de plus de 60 % en poids et une densité de matériau de plus de 5,2 kg/dm³.

3. Rivet posé par poinçonnage/estampage selon la revendication 1 ou 2, **caractérisé en ce qu'**il présente une résistance à la pression de plus de 2900 N/mm².

4. Rivet posé par poinçonnage/estampage selon l'une quelconque des revendications 1 à 3, **caractérisé en ce qu'**il présente une résistance à la flexion de plus de 700 N/mm².

5. Rivet posé par poinçonnage/estampage selon l'une quelconque des revendications 1 à 4, **caractérisé en ce qu'**il présente une résistance à la rupture de plus de 8 K_{IC}.

6. Rivet posé par poinçonnage/estampage selon l'une quelconque des revendications 1 à 5, **caractérisé en ce qu'**il présente un module d'élasticité de moins de 270 N/mm².

7. Rivet posé par poinçonnage/estampage selon l'une quelconque des revendications 1 à 6, **caractérisé en ce qu'**il présente une dureté de moins de 1900 HV 10.

8. Rivet posé par poinçonnage/estampage selon l'une quelconque des revendications 1 à 7, **caractérisé en ce que** la céramique est étanche au gaz et résistante à l'acide.
